# EUROPEAN PATENT APPLICATION

(11) **EP 0 562 110 A1**
(43) Date of publication of application: **29.09.1993**
(21) Application number: 91900928.2
(22) Date of filing: 25.12.1990
(51) Int. Cl.: F23B 5/00, F23D 14/24, C10B 53/00, C10G 1/10

(54) **DRY DISTILLATION GASIFICATION COMBUSTION APPARATUS WITH DRY DISTILLATION GAS PRODUCER AND COMBUSTION GAS BURNER SECTION**

(30) Priority: 21.12.1990 JP 417797/90; 22.12.1990 JP 417796/90
(71) Applicant: EMU.DEE.ARU CO., LTD., Sakata-shi, Yamagata-ken 998 (JP)
(72) Inventor: MAEDA, Naomi, Sakata-shi, Yamagata-Ken 998 (JP); SASAHARA, Seiichirou, Yamagata-shi, Yamagata-Ken 990 (JP)
(74) Representative: Leale, Robin George
(86) International application number: PCT/JP90/01695
(87) International publication number: WO 92/11492

(57) **Abstract**

A dry distillation gas producer for producing dry distillation gas is completely separated from a combustion gas burner section for perfectly burning gasified fuel, thereby improving the functions of the respective members as much as possible. Namely, a part of an air supplying means of dry distillation gas producer is improved, an impurity removing tank is provided in an intermediate portion connecting the dry distillation gas producer to the combustion gas burner section to thereby increase the degree of cleaness of the dry distillation gas, and the combustion gas burner section burns the combustion gas with air blown out and fed from openings of first and second air supply portions in a cylindrical burner body, which has been preheated, while fully agitating and mixing the air with the combustion gas, thus realizing the more higher perfect combustion. The dry distillation gasification combustion apparatus, wherein a gas introduction pipe is connected to a dry distillation gas take-out opening of the dry distillation gas producer, the impurity removing tank is provided in an intermediate portion of the gas introducing pipe and the gas burner section is connected to the forward end portion of the gas introducing pipe, characterized in that the dry distillation gas producer is provided at the bottom portion of a tank furnace thereof with an air chamber and an air blow-out portion communicating with the air chamber, air thus supplied flows along a ventilating recessed portion around an air diffusion cap and spreads softly and uniformly over the whole bottom surface, the combustion burner section is provided in the cylindrical burner body thereof with a preheating burner portion, and the first and second air supply portions, the air blown out and supplied from the opening of the first air supply portion is agitated and mixed with the combustion gas in the burner body, air preheated by an air storing layer, which is supplied from the second air supply portion, can be agitated and mixed with the combustion gas in the vicinity of a combustion opening portion.

## Description

### Technical Field

This invention relates to a dry distillation gas generator adapted for heating a solid fuel, e.g., a high molecular material such as rubber or plastic, etc., or tire, etc. to allow it to be combustible gas by heat decomposition, a dry distillation gasification combustion equipment in which a combustion burner unit for burning a generated dry distillation gas is combined with the dry distillation gas generator, and a combustion burner unit most suitable for use in the dry distillation gasification combustion equipment.

### Background Art

Heretofore, there is a solid fuel combustion equipment of the upward combustion system (Japanese Laid Open Patent Application No. 231307/1984), in which a combustion unit is provided on a distillation unit for allowing a solid fuel to be a distillation gas, and a heat exchange unit is provided at the upper part thereof, thus to generate a distillation gas at the lower part thereof to burn this gas while elevating it. This equipment is provided with air supply means adapted for delivering a small quantity of air at the bottom portion of the distillation unit. It is seen from the figure that an upward, air-supply opening is only bored at the bottom portion thereof.

While it can be said that this equipment is in principle a sort of the dry distillation gasification combustion equipment, it is only of a structure in which the dry distillation unit and the combustion unit are continuous in upper and lower directions, but is not of a structure such that the both units are clearly partitioned.

When attention is drawn to the dry distillation unit of this equipment, sufficient consideration is not taken in connection with generation efficiency of the dry distillation gas and/or dry distillation gasification as clean as possible, or the like. Therefore, consideration as to the environmental problem such as soot and smoke or dust, or odor, etc. was not sufficient.

Further, since this dry distillation unit is of a structure in which small upward air supply holes for supplying air are only bored at the bottom portion, those small air supply holes are immediately choked or clogged up with ashes by combustion, resulting in the drawback of an insufficient stability of performance such that the production efficiency of the dry distillation gas is lowered to much degree, or production of the distillation gas is stopped.

For this reason, an operator must devotedly carry out cleaning of small air supply holes. However, this cleaning work is a very troublesome work to insert a driver, etc. into individual holes to scrape away ashes attached therein.

As stated above, the conventional equipment was not satisfactory in its utility such as the production efficiency of the dry distillation gas, generation of a clean dry distillation gas, stability of performance as an equipment, easiness of cleaning, and readiness or easiness of maintenance, etc.

Further, when attention is drawn to the combustion unit, this unit is of a structure such that dry distillation gas is only burned within a broad combustion chamber wherein dry distillation gas is mixed with air together with soot and smoke or dust, etc. Accordingly, it is impossible to adjust a quantity of combustion, so it is the present circumstances that complete combustion cannot be carried out by any means.

On the other hand, as a gasification fuel combustion equipment for burning gasified fuel obtained by means such as dry distillation, etc. in accordance with the burner system, there is an equipment as disclosed in the Japanese Patent Publication No. 29365/1990. This equipment is common to the equipment of the invention of this application in the sense of a combustion equipment of the burner system adapted for completely burning a fuel once gasified by dry distillation or other means.

However, since this prior art is of a structure in which a rectification cylinder is formed in a projected manner within a cylindrical combustion chamber, thus to agitate and mix an air blown off from small holes with combustion gas, this equipment is satisfactory at the beginning of use, but such holes are easy to be clogged by a little use. Further, the internal structure is complicated, its cleaning and/or maintenance are very difficult.

The inventor of this application has embodied an equipment as the result of the fact that he energetically made efforts with a view to eliminating the above-mentioned drawbacks with the dry distillation gas generator or the combustion gas burner of the conventional dry distillation gasification combustion equipment thus to develop an equipment which has high performance, is easy to handle, and has high utility.

Studies on the technical problems to be solved by the present invention are as follows. First, the technical problem of the combustion burner unit will be described. Since the combustion burner unit is exposed to high temperature at all times, it may be extremely damaged, and impurities such as brands or embers are apt to be attached thereto. For this reason, maintenance is frequently required. Accordingly, it is expected to provide a combustion burner unit in which the burner is of a simple internal structure such that there are not so many uneven portions, and that cleaning is easy to be made.

Further, since the cylindrical burner body portion of the combustion burner unit becomes high temperature by combustion, it may be thermally damaged to much degree. For this reason, the burner body portion is required to have an excellent heat resisting property.

In order to realize complete combustion, it is required for the combustion burner unit to be excellent in agitating and mixing with air and to have the condition where the combustion speed and/or efficiency are excellent.

The technical problem of the dry distillation gas generator will now be described. In order to burn and heat, within a dry distillation gas generator, a solid fuel, e.g., high molecular material such as rubber or plastic, etc., or a tire, etc. to allow it dry distillation gasisfied fuel by thermal decomposition, it is required to control an oxygen supply quantity for combustion to allow a limited weak combustion state to last for a long time. Namely, it is necessary that the condition where a portion of a solid fuel is burned to cause the solid fuel to be thermally decomposed by that combustion heat and the condition where a suitable quantity of air necessary for allowing only a portion of a solid fuel to last in a weak combustion state is supplied are compatible.

However, it is technically very difficult to maintain and control the dry distillation condition by the combustion heating system to stably take out a clean combustible gas from a solid fuel such as a tire, etc. In the prior art, satisfactory combustible gas could not be provided.

In actual terms, it is first pointed out that supply of an air quantity controlled so as to maintain the dry distillation condition where combustion and heating are well-balanced is technically difficult.

Secondly, it is difficult to deliver an air in such a manner to softly and evenly spread to hold down the possibility soot and dust such as carbon, etc. may be whirled up to a minimum level, thus to take out a clean combustible gas in a stabilized manner.

Thirdly, there are many instances where when a solid fuel including many impurities such as a tire, etc. is burned and heated, impurities such as tar, carbon, wire, spike tire pin or sand, etc. are heated together, so they are melted, are reduced to ashes, or result in residual material, whereby they clog the air blowoff opening. For this reason, supply of an air in use becomes unstable, thus making it difficult to stably maintain for a long time the heat combustion state in which the dry distillation condition is satisfied.

Fourthly, it was difficult to employ such a configuration easy to eliminate residual impurities within a dry distillation gas generator to make a cleaning thereof, thus to prevent lowering of the distillation gas generation ability by a long time use.

This invention contemplates solving the technical problems as described above.

The technical problem of the invention concerning the dry distillation gasification combustion equipment will be now described.

In recent dry distillation gasification combustion equipments, how to stably take out a clean combustible gas from a solid fuel in the dry distillation gas generator and how to completely burn it at the combustion gas burner unit are the basic problems. However, there is the problem that while there may be only employed a double combustion system to merely primarily burn a solid fuel within a dry distillation gas generator to generate dry distillation gas to secondarily burn it at the combustion unit to thereby burn it with an efficiency as high as possible, such a system cannot cope with the recent environmental problem such as soot and smoke or dust, or odor, etc.

The inventor of this application contemplates providing a configuration in which a dry distillation gas generator for generating dry distillation gas and a combustion gas burner unit for completely burn gasified fuel are completely partitioned or divided, thus to improve respective functions thereof as far as possible. Especially, the inventor has drawn attention to the fact that, in order to completely burn a solid fuel to such an degree that no soot, smoke or odor, etc. is produced, it is the most important condition that the dry distillation gas is as clean as possible, and that a predetermined quantity of the dry distillation gas is produced in a stable state at all times. With the above in view, the inventor has advantageously adopted a scheme to first improve the portions of the dry distillation gas generator and the air supply means, and to provide an impurity separation tank in the middle of a gas conduit connecting the dry distillation gas generator and the combustion gas burner unit to improve cleanness of dry distillation gas delivered into the combustion gas burner unit, thus to contemplate realizing a complete combustion of a higher level.

### Disclosure of the Invention

In accordance with a first invention for which patent is sought to be granted, there is prepared, as a dry distillation gas generator, a dry distillation gas generator characterized in that an air chamber and an air blow-off section communicating with the air chamber are disposed at the bottom portion of a tank furnace or combustion chamber having a fuel throw-in portion adapted so that it is opened and closed and a dry distillation gas outlet, wherein the air blowoff section is comprised of an air vent recessed portion bored at a suitable portion of the bottom surface, an air duct allowing the air chamber provided at the central portion of the air vent recessed portion and the interior of the tank furnace to communicate with each other, and an air dispersion cap fitted into an opening portion in the tank furnace of the air duct, the upper surface of the air dispersion cap being caused to be a portion of the bottom surface of the tank furnace, a blowoff hole being formed at the circumferential side of the air dispersion cap so that an air from the air duct is supplied in a decelerated and dispersed state substantially uniformly into the tank furnace from the circumferential side blowoff hole of the air dispersion cap toward the lateral direction, the supplied air being allowed to softly and evenly spread over the entirety of the bottom surface along the air vent recessed portion around the air dispersion cap.

Then, there is prepared, as a combustion gas burner unit, a combustion gas burner unit characterized in that a cylindrical burner body is formed by a refractory material such as ceramic, etc., a gas conduit portion being formed at the bottom end portion of the burner body, a combustion opening being formed at the front end thereof, a preheat burner unit for igniting a pilot being provided at a position close to the bottom end side of the burner body, an air storage layer being provided at the outer circumferential surface of the intermediate portion of the burner body, a first air supply section opened at an angle rotated in a spiral form from the outside being provided at the side wall of the burner body, a second air supply section opened at an angle rotated in a spiral form from the air supply layer being provided at the portion slightly closer to the front end side, an air supplied blown off and supplied from the opening of the first air supply unit being caused to be agitated and mixed with combustion gas within the burner body, an air pre-heated at the air storage layer being supplied from the second air supply section so that it can be agitated and mixed with combustion gas in the vicinity of the combustion opening.

In addition, a gas conduit is connected to a dry distillation gas outlet of the dry distillation gas generator to provide an impurity separation tank in the middle of the gas conduit to connect the combustion gas burner unit to the front end portion of the gas conduit. A dry distillation gasification combustion equipment thus featured is provided.

In accordance with the second invention for which patent is sought to be granted, a dry distillation gas generator featured below is first prepared. Namely, a tank furnace having a fuel throw-in portion adapted so that it can be opened and closed and a dry distillation gas outlet is provided with a cooling layer at the entire outer circumferential surface of the tank furnace. The bottom portion of the tank furnace is of a triple layer structure of a bottom surface made up by a heat resisting material, a cooling layer, and an air chamber. At the side portion of the air chamber, a cleaning port is provided. In addition, a plurality of air blowoff portions are disposed at the bottom portion of the tank furnace. The air blowoff portion is comprised of an air vent recessed portion bored at a suitable portion of the bottom surface, an air duct allowing the air chamber provided at the central portion of the air vent recessed portion and the interior of the tank furnace to communicate with each other, and an air dispersion cap fitted into the opening in the tank furnace of the air duct. The upper surface of the air dispersion cap is caused to be a portion of the bottom surface of the tank furnace, an air blown off from the air ducts being supplied in a decelerated and dispersed state substantially uniformly into the tank furnace from blowoff holes formed on the circumferential of the air dispersion caps toward the lateral direction, the supplied air being allowed to softly and evenly spread over the entirety of the bottom surface along the air vent recessed portion around the air dispersion cap.

Then, there is prepared, as a combustion gas burner unit, a combustion gas burner unit characterized in that a cylindrical burner body is formed by a refractory material such as ceramic, etc., a gas conduit section being formed at the bottom end portion of the burner body, a combustion opening being formed at the front end thereof, a preheat burner section for igniting a pilot being provided at a position close to the bottom end side of the burner body, an air storage layer being provided at the outer circumferential surface of the intermediate portion of the burner body, a first air supply section opened at an angle rotated in a spiral form from the outside being provided at the side wall of the burner body, a second air supply section opened at an angle rotated in a spiral form from the air supply layer being provided at the portion slightly closer to the front end side, an air blown off and supplied from the opening of the first air supply section being caused to be agitated and mixed with combustion gas within the burner body, an air pre-heated at the air storage layer being supplied from the second air supply unit so that it can be agitated and mixed with combustion gas in the vicinity of the combustion opening.

In addition, a gas conduit is connected to a dry gas outlet of the dry distillation gas generator to provide an impurity separation tank in the middle of the gas conduit to connect the combustion gas burner unit to the front end portion of the gas conduit. A dry distillation gasification combustion equipment thus featured is provided.

In accordance with a third invention for which patent is sought to be granted, there is provided a dry distillation gas generator characterized in that an air chamber and an air blow-off section communicating with the air chamber are disposed at the bottom portion of a tank furnace or combustion chamber having a fuel throw-in portion adapted so that it can be opened and closed and a dry distillation gas outlet, wherein the air blowoff portion is comprised of an air vent recessed portion bored at a suitable portion of the bottom surface, an air duct allowing the air chamber provided at the central portion of the air vent recessed portion and the interior of the tank furnace to communicate with each other, and an air dispersion cap fitted into an opening in the tank furnace of the air duct, the upper surface of the air dispersion cap being caused to be a portion of the bottom surface of the tank furnace, a blowoff opening or hole being formed at the circumferential side of the air dispersion cap so that an air from the air duct is supplied in a decelerated and dispersed state substantially uniformly into the tank furnace from the circumferential side blowoff hole of the air dispersion cap toward the lateral direction, the supplied air being allowed to softly and evenly spread over the entirety of the bottom surface along the air vent recessed portion around the air dispersion cap.

In accordance with a forth invention for which patent is sought to be granted, a dry distillation gas generator featured below is prepared. Namely, a tank furnace having a fuel throw-in portion adapted so that it can be opened and closed and a dry distillation gas outlet is provided with a cooling layer at the entire outer circumferential surface of the tank furnace. The bottom portion of the tank furnace is of a triple layer structure of a bottom surface-made up by a heat resisting material, a cooling layer, and an air chamber. At the side portion of the air chamber, a cleaning port is provided. In addition, a plurality of air blowoff portions are disposed at the bottom portion of the tank furnace. The air blowoff section is comprised of an air vent recessed section bored at a suitable portion of the bottom surface, an air duct allowing the air chamber provided at the central portion of the air vent recessed portion and the interior of the tank furnace to communicate with each other, and an air dispersion cap fitted into an opening in the tank furnace of the air duct. The upper surface of the air dispersion cap fitted into the opening in the tank furnace is caused to be a portion of the bottom surface of the tank furnace, an air blown off from the air duct being supplied in a decelerated and dispersed state substantially uniformly into the tank furnace from the circumferential side blowoff opening formed on the circumferential side of the air dispersion cap toward the lateral direction, the supplied air being allowed to softly and evenly spread over the entirety of the bottom surface along the air vent recessed portion around the air dispersion cap.

In accordance with a fifth invention for which patent is sought to be granted, there is provided a combustion gas burner unit featured below. Namely, a cylindrical burner body is formed by a refractory material such as ceramic, etc., a gas conduit portion being formed at the bottom end portion of the burner body, a combustion opening being formed at the front end thereof, a preheat burner section for igniting a pilot being provided at a position close to the bottom end side of the burner body, an air storage layer being provided at the outer circumferential surface of the intermediate portion of the burner body, a first air supply section opened at an angle rotated in a spiral form from the outside being provided at the side wall of the burner body, a second air supply section opened at an angle rotated in a spiral form from the air supply layer being provided at the portion slightly closer to the front end side, an air supplied blown off and supplied from the opening of the first air supply unit being caused to be agitated and mixed with combustion gas within the burner body, an air pre-heated at the air storage layer being supplied from the second air supply portion so that it can be agitated and mixed with combustion gas in the vicinity of the combustion opening.

Since the first invention for which patent is sought to be granted is constructed as above, when a solid fuel such as a tire, etc. is admitted from the fuel throw-in portion into the tank furnace to blow an air into the air chamber at the bottom portion thereof, a predetermined quantity of air is supplied into the dry distillation gas generator through the air blowoff section communicating with the air chamber. At this time, since the air blowoff section is comprised of the air vent recessed portion bored at a suitable portion of the bottom surface of the tank furnace, the air duct allowing the air chamber provided at the central portion of the air vent recessed portion and the interior of the tank furnace to communicate with each other, and the air dispersion cap fitted into the opening in the tank furnace of the air duct, and the blowoff hole is formed at the circumferential side of the air dispersion cap, an air blown from the air duct is supplied in a decelerated and dispersed fashion substantially uniformly into the tank furnace from the circumferential side blowoff hole of the air dispersion cap toward the lateral direction, and the supplied air is supplied in such a manner to softly and evenly spreads over the entirety of the bottom surface along the fair vent recessed portion around the air dispersion cap.

When the accommodated solid fuel such as a tire, etc. is ignited, only the portion of the solid fuel in the vicinity of the bottom portion of the tank furnace where air spreads is burned.

At that time, the upper surface of the air dispersion cap is caused to serve as a portion of the bottom surface of the tank furnace such that there is no projecting portion. Thus, accommodation of the solid fuel is easy.

Further, since the air dispersion cap is such that the blowoff hole or opening is formed on the circumferential side thereof, and that the air vent recessed portion is formed therearound, there is no possibility that the air blowoff opening is inadvertently clogged by the solid fuel. In addition, since a blowing force of air is used for spreading toward the lateral direction through the air vent recessed section, and an air which has lost its blowing force is dispersed and supplied softly in an upper direction, there results the state where air spreads softly and evenly at all times.

As a result, the combustion area of the solid fuel is limited to the portion in the vicinity of the bottom portion where air is stably supplied, but does not spread over other portions. Further, by such a stabilized partial combustion in the vicinity of the bottom portion, the solid fuel therearound is heated so that thermal decomposition is produced. Thus, dry distillation gas is efficiently and stably generated. In addition, since an air supplied is softly diffused and supplied at all times, there is no possibility that carbon is whirled up or floats by air within the tank furnace, thus permitting dry distillation gas produced to be a clean gas having less impurities.

By employing the dry distillation gas generator as stated above, the dry distillation gasification combustion equipment of this application efficiently and stably generates a dry distillation gas having less impurity to allow it to be a more clean dry distillation gas by making use of the impurity separation tank provided in the middle of the gas conduit to introduce it into the combustion gas burner unit.

The clean dry distillation gas introduced from the gas conduit of the burner body is agitated and mixed with, while rotating, the air blown off and delivered from the opening of the first air supply section within the cylindrical burner body heated in advance by the preheat burner section, and is introduced in a direction of the combustion opening at the front end thereof. The dry distillation air thus introduced is ignited by a pilot of the preheating burner unit, and is guided in a direction of the combustion opening at the front end portion. The dry distillation gas thus introduced is ignited by a pilot of the preheat burner section, so it is burned while blowing out flame from the combustion opening. In this instance, in the vicinity of the combustion opening, the air preheated by the air storage layer is further delivered from the second air supply portion, and is agitated and mixed with combustion gas, thus further assisting combustion. By employing such an a configuration, a clean dry distillation gas is completely burned at the combustion gas burner unit.

The configuration of the air blowoff section of the second invention for which patent is sought to be granted is the same as that of the first invention, and effects/advantages are the same as those of the first invention. Accordingly, their explanation is omitted here.

The feature of the second invention except for the above resides in that cooling layer is provided at the entire outer circumference of the tank furnace, that its bottom portion is of a triple layer structure of bottom surface made up by heat resisting material, cooling layer and air chamber, and that a cleaning port in the air chamber is provided at the side portion of the air chamber. The configuration thus featured provides the following effect.

First, installation of the cooling layer on the entire outer circumference of the tank furnace provides the effect to suppress temperature elevation within the tank furnace to prevent extra or unnecessary combustion except for portions in the vicinity of the bottom portion of the solid fuel, thus allowing occurrence of soot and smoke or dust and floating thereof to be as little as possible.

Further effect is as follows. As the result of the fact that the bottom portion is caused to be of a triple layer structure, the high temperature portion on the surface of the bottom is allowed to have sufficient durability. Further, by provision of the cooling layer, the bottom portion of the tank furnace is caused not to rise to a temperature higher than that required. By a large air chamber, air is permitted to be evenly supplied over the entirety of the bottom portion. An air supplied is preliminarily heated.

In addition, by making use of the cleaning port provided at the side portion of the air chamber, it becomes possible to easily making a cleaning of residual impurities dropped through the air duct and stacked or accumulated.

By using the dry distillation gas generator as stated above, the dry distillation gasification combustion equipment of this application efficiently and stably generates dry distillation gas including less impurity to allow it to be a more clean dry distillation gas by the impurity separation tank provided in the middle of the gas conduit to introduce such a more clean dry distillation gas into the combustion gas burner unit. The dry distillation gas generated by the dry distillation gas generator of this invention has a cleanness higher than that of the first invention.

The dry distillation gas as clean as possible will be completely burned at the combustion gas burner unit. Since the effect within the combustion gas burner unit is the same as that within the combustion gas burner unit described in the first invention, its explanation is omitted here.

Since the effect of the dry distillation gas generator of the third invention for which patent is sought to be granted is the same as that of the dry distillation gas generator of the first invention, and the effect of the dry distillation gas generator of the fourth invention is the same as that of the first invention, their explanation is omitted here.

In addition, the effect within the combustion gas burner unit of the fifth invention is also the same as that of the first invention, its explanation is omitted here.

### Brief Description of the Drawings

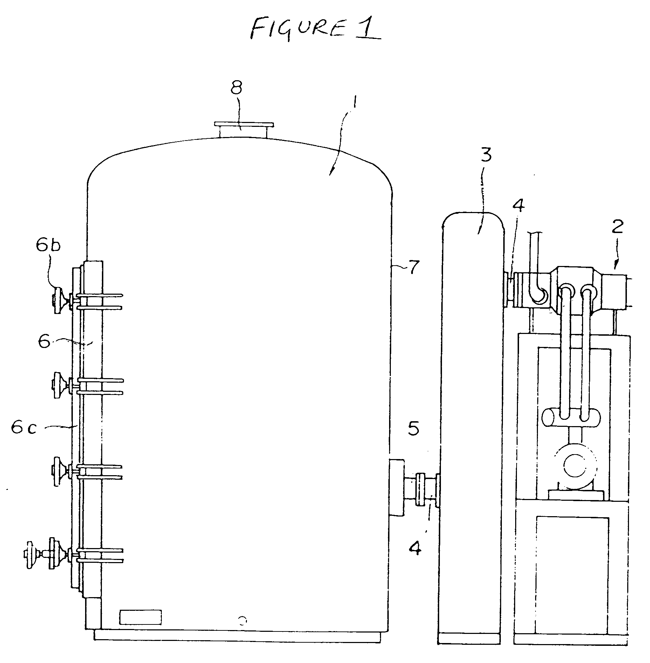

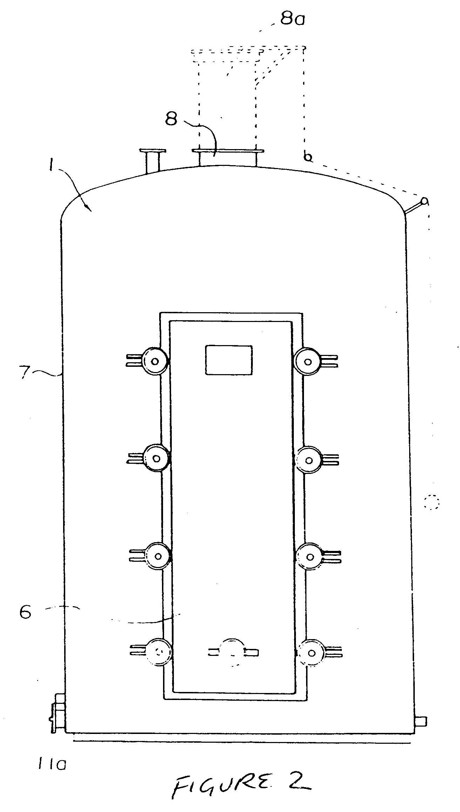

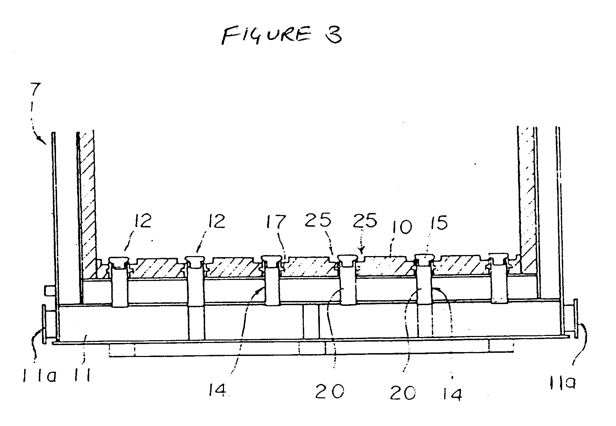

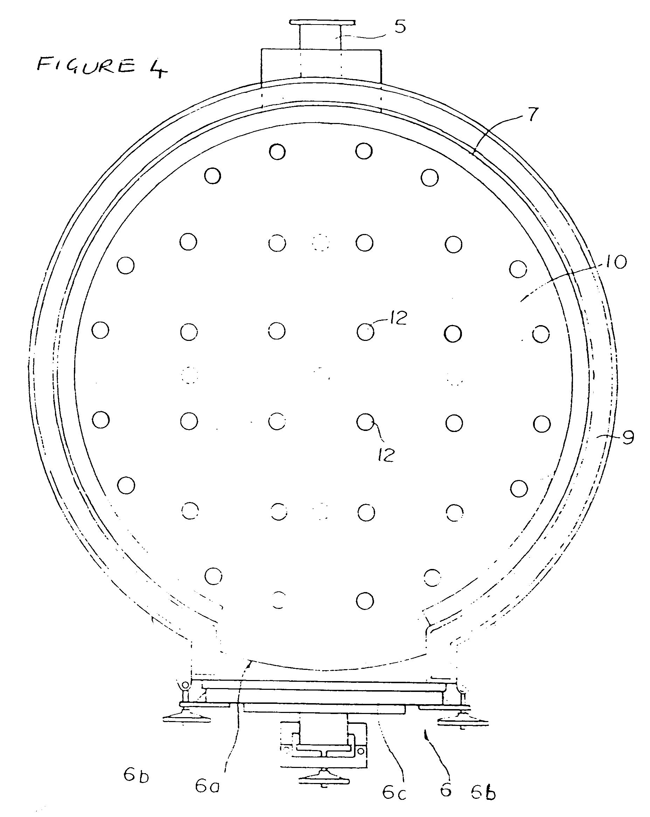

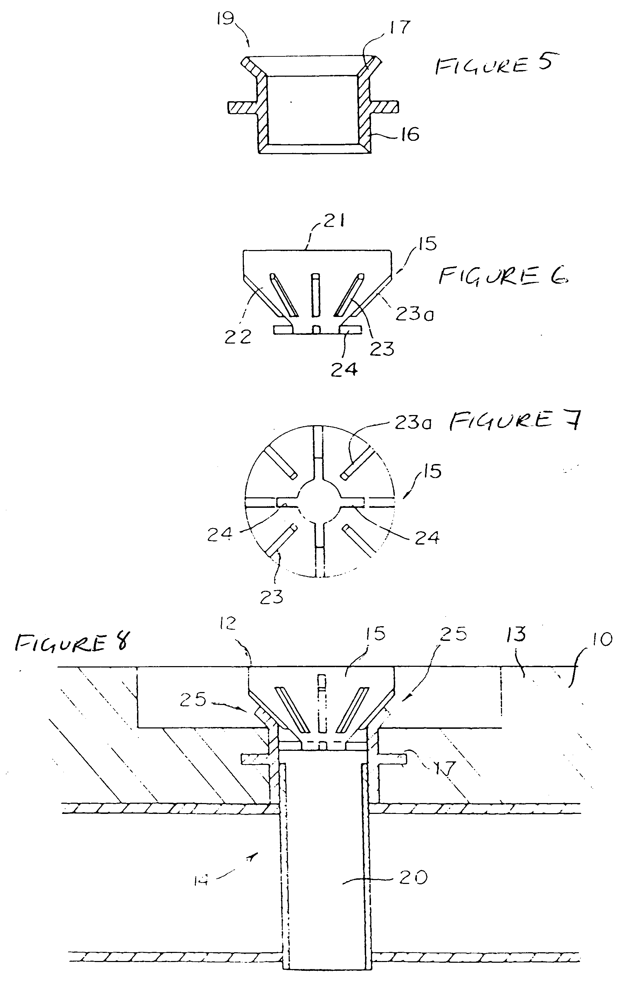

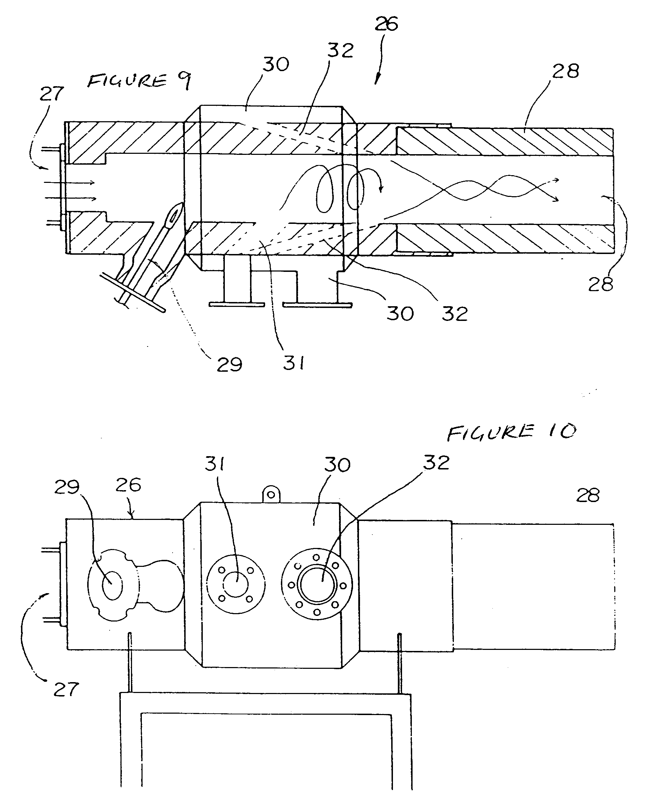

FIG. 1 is a side view showing a dry distillation gasification combustion equipment, FIG. 2 is a front view showing a dry distillation gas generator, FIG. 3 is a longitudinal cross sectional side elevation showing the structure of the bottom portion within the tank furnace, FIG. 4 is a plan view showing the structure of the bottom portion shown in FIG. 3, FIG. 5 is a longitudinal cross sectional side elevation showing the configuration of an air duct of the air blowoff portion, FIG. 6 is a perspective view showing an air dispersion cap, FIG. 7 is a bottom view showing an air dispersion cap, FIG. 8 is a longitudinal cross sectional explanatory view showing the state where the air blowoff portion is attached on the bottom portion, FIG. 9 is a longitudinal cross sectional plan view of a combustion gas burner unit, and FIG. 10 is a side view of the combustion gas burner unit.

### Best Mode for Carrying Out the Invention

The invention of this application will now be described in detail in connection with an embodiment shown.

FIG. 1 is a side view showing a dry distillation gasification combustion equipment, and FIG. 2 is a front view showing a dry distillation gas generator. The dry distillation gasification combustion equipment is of a basic structure in which a dry distillation gas generator 1 and a combustion gas burner unit which are separately made up are connected or joined by a gas conduit 4 provided with an impurity separation tank 3 in the middle portion thereof.

The dry distillation gasification combustion equipment of the embodiment shown is designed as an equipment most suitable in the case where a used tire is mainly used as a solid fuel to generate a dry distillation gas therefrom to completely burn it, thus to provide a thermal energy. In accordance with this equipment, the gas conduit 4 is connected to a dry distillation gas outlet 5 provided at the rear portion of the dry distillation gas generator 1, the impurity separation tank 3 is provided in the middle portion of the gas conduit 4, and the combustion gas burner unit 2 is connected to the front end portion of the gas conduit 4.

The dry distillation gas generator 1 will now be described in detail. As shown in FIGS. 1 and 2, this dry distillation gas generator 1 is constructed as a tank furnace 7 made of carbon steel, having a fuel throw-in portion 6 adapted so that it can be opened and closed, and a dry distillation gas outlet 5.

It is to be noted that reference numeral 8 in the figure denotes a safety valve provided on the top portion of the tank furnace 7, and another safety valve 8a may be provided according to need.

The structure of the interior of the tank furnace 7 is shown in FIGS. 3 to 5. Namely, FIG. 3 is a longitudinal cross sectional side elevation showing the structure of the bottom portion within the tank furnace 7, and FIG. 4 is a plan view showing the structure of the bottom portion shown in FIG. 3.

As seen from these figures, the fuel throw-in portion 6 adapted so that it can be opened and closed is comprised of a fuel entrance/exit 6a opened greatly toward the front side of the tank furnace 7, and a tank door 6c with sealing devices 6b. In this instance, since the fuel entrance/exit 6a is large, it is possible to easily throw a solid fuel such as a tire, etc. into the tank furnace 7 to stack or accumulate it therewithin, and to take out residual material after combustion, or make a cleaning. While, in the embodiment shown, there is employed the mode for implementation where a single dry distillation gas outlet 5 is provided backward of the tank furnace 7, it is of course that there may be employed a configuration such that dry distillation gas outlets are provided not only at the backward portion but also at side portions in left and right directions to select a suitable one depending upon installation places to connect the gas conduit 4 thereto.

On the entire circumference of the tank furnace 7, a cooling layer 9 in which a cooling water is contained is provided. The provision of the cooling layer 9 aims at cooling the tank furnace 7.

It is to be noted that since the cooling layer 9 is adapted so as to extend to just the back of the packing of the tank door 6c constituting the fuel entrance/exit 6a, aging by heat of the packing is prevented, thus enabling the equipment to be used for a long time.

The bottom portion of the tank furnace 7 is of a triple layer structure of a bottom surface 10 made up by a heat resisting material, cooling layer 9, and an air chamber 11. At the side portions of the air chamber 11, clearing ports 11a are provided.

Since the inner circumferential surfaces of the lower portions of the bottom surface 10 and the tank furnace 7 serve as portions subject to heating, they are made of ceramic having heat resisting property.

The cooling layer 9 forms a water jacket system in which a cooling water is contained at the outside of the bottom surface 10, and is adapted to cool the bottom surface 10 subject to high temperature, thus to realize protection thereof and an increased durable life. The air chamber 11 formed outside the cooling layer 9 is in the form of an air chamber formed on the entire surface of the bottom portion, and is of a structure such that blowoff of an air is caused to be uniform, and that a necessary quantity of air can be supplied at any time.

At the bottom portion of the tank furnace 7, a plurality of air blowoff portions 12, 12a ... are disposed in such a manner that they spread substantially uniformly as shown in FIGS. 3 and 4.

The detailed configuration of the air blowoff portions 12, 12a ... is shown in FIGS. 5 to 8. In accordance with this configuration, each of the air blowoff portions 12, 12a ... is comprised of an air vent recessed portion 13 bored at a suitable portion of the bottom surface 10, an air duct 14 allowing the air chamber 11 provided at the central portion of the air vent recessed portion 13 and the interior of the tank furnace 7 to communicate with each other, and an air dispersion cap 15 fitted into the opening portion in the tank furnace 7 of the air duct 14.

The air duct 14 is comprised, as shown in FIG. 5, of a fitting member 19 including an air dispersion cap receiving portion 17 formed at the upper end opening portion of the tubular body 16, and an embedded projecting portion 18 provided in a projected manner on the outside surface, and a cylindrical body 20 attached at the lower portion thereof.

Further, the air dispersion cap 15 is formed of a heat resisting special casting in the form of an inverse triangular cone, as shown in FIGS. 6 such 7, such that the upper surface 21 is flat and the lower surface is formed as a tapered surface 22. At the tapered surface 22, several radial projections 23, 23 ... are provided, and a centering projection 24 is formed in the vicinity of the lower end. When the air dispersion cap 15 formed in this way is inserted into the opening portion of the air duct 14, the centering projection 24 internally comes into contact with the inner circumferential surface of the air duct 14 and is fitted thereinto while being subjected to an attitude control such that it is located at the central portion, and the radial projections and the air dispersion cap receiving portion 17 are connected, thus to form a blowoff opening or hole 25 between the air dispersion cap receiving portion 17 and the tapered surface 22.

When the air dispersion cap 15 fitted into the opening in the tank furnace 7 in this way, its upper surface 21 serves as a portion of the bottom surface 10 of the tank, and an air blown off from the air duct 14 is supplied in a decelerated and dispersed manner substantially uniformly into the tank furnace 7 from the blowoff hole 25 formed on the circumferential side of the air dispersion cap 15 toward the lateral direction. The air thus supplied softly and evenly spreads over the entirety of the bottom surface 10 along the air vent recessed portion 13 around the air dispersion cap 15.

As described above, in accordance with this invention, the air blowoff portions 12, 12a ... are constituted with two members of the air duct 14 and the air dispersion cap 15, the air duct 14 is fixed on the bottom portion, and the air dispersion cap 15 is detachably provided. Thus, it is possible to cope with expansion and distortion due to heat to tolerate a long time use. Further, it is possible to detach the air dispersion cap 15 to make a cleaning thereof with ease, and exchange and/or maintenance, etc. of parts become easy.

It is to be noted that, although not shown, within the tank furnace, there are installed a temperature for monitoring a dry distillation gas, a sensor capable of automatically adjusting a quantity of gas when a temperature reaches a predetermined temperature (150 to 200°C), and an electromagnetic valve for allowing an air to be in a complete sealing state in the case where the power supply is turned OFF at the time of a power interruption, etc., thus making it possible to conduct a complete control.

The combustion gas burner unit 2 will now be described with reference to the attached drawings. FIG. 9 is a longitudinal cross sectional plan view of the combustion gas burner unit 2, and FIG. 10 is a side view of the combustion gas burner unit 2.

Reference numeral 26 in the figure denotes a cylindrical burner body formed by refractory material such as ceramic, etc. A gas conduit portion 27 is formed at the bottom end portion of the burner body 26, a combustion opening 28 is formed at the front end portion thereof, a preheat burner unit 29 for igniting a pilot is provided at the position close to the bottom end side of the burner body 26, and an air storage layer 30 is provided on the outer circumference of the intermediate portion of the burner body 26. It is to be noted that it is of course that the combustion opening portion 28 may be of a removable structure as shown, or may be integrally formed.

Further, a first air supply section 31 opened at an angle rotated in a spiral form from the outside is provided at the intermediate portion of the wall of the burner body 26, and second air supply sections 32 and 32 opened at an angle rotating in a spiral form from the air supply layer 30 are provided at the portion slightly closer to the front end side.

An aid blown off and supplied from the opening of the first air supply unit 31 is caused to be agitated and mixed with combustion gas within the burner body 26, and an air pre-heated at the air storage layer 30 is supplied from the second air supply sections 32 and 32, thus permitting it to be agitated and mixed with combustion gas in the vicinity of the combustion opening 28. The combustion gas burner unit thus featured is provided. Industrial Applicability

The first invention for which patent is sought to be granted is directed to a dry distillation gasification combustion equipment in which a dry distillation gas generator, a combustion gas burner unit, and an impurity separation tank are connected by using a gas conduit, wherein the dry distillation gas generator featured below is used. Namely, as described, the air blowoff section is comprised of air vent recessed portion bored at a suitable portion of the bottom surface, air duct allowing the air chamber provided at the central portion of the air vent recessed portion and the interior of the tank furnace, and air dispersion cap fitted into an opening portion within the tank furnace of the air duct, the upper surface of the air dispersion cap being caused to be a portion of the bottom surface of the tank furnace, a blowoff opening being formed at the circumferential side of the air dispersion cap so that an air from the air duct is supplied substantially uniformly in a decelerated and dispersed state into the tank furnace from the circumferential side blowoff hole of the air dispersion cap toward the lateral direction, the supplied air being allowed to softly and evenly spread over the entirely of the bottom surface along the air vent recessed portion around the air dispersion cap.

Accordingly, when a solid fuel such as a tire, etc. is admitted from the fuel throw-in portion into the tank furnace to blow an air into the air chamber at the bottom portion thereof, a predetermined quantity of air can be supplied into the dry distillation gas generator through the air blowoff portion communicating with the air chamber. At this time, since an air blown from the air duct is supplied in a decelerated and dispersed fashion substantiallty uniformly into the tank furnace from the circumferential side blowoff opening of the air dispersion cap toward the lateral direction, the supplied air is supplied in such a manner to softly and evenly spreads over the entirety of the bottom surface along the air vent recessed portion around the air dispersion cap.

As a result, in the dry distillation gas generator, first, it is possible to stably supply a predetermined quantity of air controlled so as to maintain the distillation condition where combustion and heating are balanced. For this reason, the combustion area of the solid fuel is limited to the portion in the vicinity of the bottom portion where air is stably supplied. Accordingly, by such a stabilized partial combustion in the vicinity of the bottom portion, the solid fuel therearound is heated so that thermal decomposition is produced. Thus, dry distillation gas is efficiently and stably generated.

Secondly, since an air supplied is softly diffused and supplied at all times, there is no possibility that carbon within the tank furnace is whirled up or floats by air, thus making it possible to take out a clean combustible gas in a stabilized manner.

Thirdly, the upper surface of the air dispersion cap is caused to serves as a portion of the bottom surface of the tank furnace, and a blowoff opening is formed on the circumferential side of the air dispersion cap so that an air from the air duct is supplied in a decelerated and dispersed manner substantially uniformly into the tank furnace from the circumferential side blowoff opening of the air dispersion cap toward the lateral direction. Thus, the following advantage will be provided. Namely, when a solid fuel including many impurities such as a tire, etc. is burned and heated, impurities such as tar, carbon, wire, spike tire pin, or sand, etc. are heated together, so that they are melted, are reduced to ashes, or result in residual material. Even if there results such state, however, there is no possibility that they easily clog the air blowoff opening. For this reason, there is little possibility that air supply becomes unstable in use, thus making it possible to stably maintain for a long time the heat/combustion state where the dry distillation condition is satisfied.

Fourthly, since the air blowoff opening is large, and it becomes easy to remove residual impurities within the dry distillation gas generator and to make a cleaning thereof if the air dispersion cap is removed, lowering the dry distillation gas generation ability due to a use for a long time can be prevented.

The advantages as described above are thus provided. These advantages are the advantages or features of the dry distillation gasification combustion equipment according to the first invention of this application.

Further, the feature of the combustion gas burner unit resides in that a clean dry distillation gas introduced from the gas conduit portion of the burner body is agitated and mixed, while rotating, with an air blown off and supplied from the opening of the first air supply portion within the cylindrical burner body heated in advance by the preheat burner section, and is introduced in a direction of the combustion opening at the front end to ignite at the same time that mixed gas by a pilot of the preheat burner section, thus to efficiently burn it while blowing flame from the combustion opening. In addition, in the vicinity of the combustion opening, an air pre-heated at the air storage layer is further supplied from the second air supply section, and is agitated and mixed with combustion gas, thus further assisting combustion. Since sufficient air supply and agitation, and preheating are applied to the combustion burner unit of the invention in this way, a clean dry distillation gas can be efficiently and completely burned.

Namely, the dry distillation gasification combustion equipment of the first invention is adapted to efficiently and stably generate a dry distillation gas including less impurities by means of the dry distillation gas generator to allow it to be a more clean dry distillation gas by means of the impurity separation tank provided in the middle of the gas conduit to introduce such a more clean gas into the combustion gas burner unit, thus to completely burn it at the combustion gas burner unit. Accordingly, a thermal energy free from soot and smoke or dust can be produced. The second invention is also directed, similarly to the first invention, to a dry distillation gasification combustion equipment characterized in that a dry distillation gas generator, a combustion gas burner unit, and an impurity separation tank are connected or joined by using a gas conduit wherein the structure of the dry distillation gas generator is only partially different.

Also in the dry distillation gas generator of the second invention, the configuration of its air blowoff section is the same as that of the first invention, and the advantages obtained therewith are therefore the same.

The feature of the dry distillation gas generator in the second invention except for the above resides in that provision of the cooling layer on the entire outer circumference of the tank furnace suppresses elevation in temperature to prevent extra or unnecessary combustion at portions except for the portion in the vicinity of the bottom portion of the solid fuel to hold down occurrence of soot and smoke or dust to a minimum level, thus permitting a dry distillation gas produced to be a clear gas.

Further, as the result of the fact that bottom portion of a three layer structure is employed, the high temperature portion on the surface of the bottom portion is caused to have a sufficient durability. Moreover, the provision of the cooling layer permits the bottom portion of the tank furnace not to rise up to a temperature higher than that required. Furthermore, an air is caused to be evenly supplied to the entirety of the bottom portion by making use of the large air chamber, and an air supplied is preliminarily heated, thus allowing occurrence efficiency of the dry distillation gas to be satisfactory.

In addition, by making use of the cleaning port provided at the side portion of the air chamber, it is possible to easily make a cleaning of residual impurities dropped through the air duct and accumulated.

On the other hand, since the configuration of the combustion gas burner unit is the same as that of the first invention, the advantages or features thereof are the same.

Namely, in accordance with the second invention, an employment of a higher performance dry distillation gas generator provides the following advantages. Namely, a dry distillation gas including less impurities is efficiently and stably generated. An extra or unnecessary combustion at portions except for the portion in the vicinity of the bottom portion of the solid fuel is prevented. Occurrence of soot and smoke or dust and floating thereof are caused to be as little as possible. The high temperature portion on the surface of the bottom portion has sufficient durability. Rising in temperature of the bottom portion is prevented. An air is evenly supplied. In addition, cleaning is easily made.

Further, by making use of the impurity separation tank provided in the middle of the gas conduit, it is possible to allow a dry distillation gas to be a more clean dry distillation gas to introduce such a more clean dry distillation gas into the combustion gas burner unit, thus to completely burn it at the combustion gas burner unit.

In the combustion gas burner unit according to the third invention, a clean dry distillation gas introduced from the gas conduit section of the burner body is agitated and mixed, while rotating, with an air blown off and supplied from the opening of the first air supply section within the cylindrical burner body, and such a mixture is guided in a direction of the combustion opening of the front end portion. At the same time, this mixture is ignited by a pilot of the preheat burner section. Thus, the fuel is efficiently burned while blowing off flame from the combustion opening.

In addition, in the vicinity of the combustion opening portion, an air pre-heated by the air storage layer is further supplied from the second air supply section, and is agitated and mixed with a combustion gas, thus further assisting combustion. Since sufficient supply and agitation of an air and preheating are applied to the combustion burner unit of the third invention in this way, a clean dry distillation gas can be efficiently and completely burned.

## Claims

1. A dry distillation gasification combustion equipment
wherein there is prepared, as a dry distillation gas generator, a dry distillation gas generator characterized in that an air chamber and an air blow-off section communicating with the air chamber are disposed at the bottom portion of a tank furnace or combustion chamber having a fuel throw-in portion adapted so that it can be opened and closed and a dry distillation gas outlet, the air blowoff section being comprised of an air vent recessed portion bored at a suitable portion of the bottom surface, an air duct allowing the air chamber provided at the central portion of the air vent recessed portion and the interior of the tank furnace to communicate with each other, and an air dispersion cap fitted into an opening portion within the tank furnace of the air duct, the upper surface of the air dispersion cap being caused to be a portion of the bottom surface of the tank furnace, a blowoff opening being formed at the circumferential side of the air dispersion cap so that an air from the air duct is supplied in a decelerated and dispersed state substantially uniformly into the tank furnace from the circumferential side blowoff opening of the air dispersion cap toward the lateral direction, the supplied air being allowed to softly and evenly spread over the entirely of the bottom surface along the air vent recessed portion around the air dispersion cap,
wherein there is prepared, as a combustion gas burner unit, a combustion gas burner unit characterized in that a cylindrical burner body is formed by a refractory material such as ceramic, etc., a gas conduit section being formed at the bottom end portion of the burner body, a combustion opening being formed at the front end thereof, a preheat burner section for igniting a pilot being provided at a position close to the bottom end side of the burner body, an air storage layer being provided at the outer circumferential surface of the intermediate portion of the burner body, a first air supply section opened at an angle rotated in a spiral form from the outside being provided at the side wall of the burner body, a second air supply section opened at an angle rotated in a, spiral form from the air supply layer being provided at the portion slightly closer to the front end side, an air supplied blown off and supplied from the opening of the first air supply section being caused to be agitated and mixed with combustion gas within the burner body, an air pre-heated at the air storage layer being supplied from the second air supply section so that it can be agitated and mixed with combustion gas in the vicinity of the combustion opening, and
wherein a gas conduit is connected to the dry gas outlet of the dry distillation gas generator to provide an impurity separation tank in the middle of the gas conduit to connect the combustion gas burner unit to the front end portion of the gas conduit.

2. A dry distillation gasification combustion equipment,
wherein there is prepared, as a dry distillation gas generator, a dry gas generator characterized in that a tank furnace having a fuel throw-in portion adapted so that it can be opened and closed and a dry distillation gas outlet is provided with a cooling layer at the entire outer circumferential surface of the tank furnace, the bottom-portion of the tank furnace being of a triple layer structure of a bottom surface made up by a heat resisting material, the cooling layer, and an air chamber, a cleaning port is provided at the side portion of the air chamber, a plurality of air blowoff portions being disposed at the bottom portion of the tank furnace, the air blowoff portion being comprised of an air vent recessed portion bored at a suitable portion of the bottom surface, an air duct allowing the air chamber provided at the central portion of the air vent recessed portion and the interior of the tank furnace to communicate with each other, an air dispersion cap being fitted into an opening in the tank furnace of the air duct, the upper surface of the air dispersion cap being caused to be a portion of the bottom surface of the tank furnace, an air blown off from the air duct being supplied substantially uniformly in a decelerated and dispersed state into the tank furnace from a blowoff opening on the the circumferential side of the air dispersion cap toward the lateral direction, the supplied air being allowed to softly and evenly spread over the entirety of the bottom surface along the air vent recessed portion around the air dispersion cap,
wherein there is prepared, as a combustion gas burner unit, a combustion gas burner unit characterized in that a cylindrical burner body is formed by a refractory material such as ceramic, etc., a gas conduit section being formed at the bottom end portion of the burner body, a combustion opening being formed at the front end thereof, a preheat burner section for igniting a pilot being provided at a position close to the bottom end side of the burner body, an air storage layer being provided at the outer circumferential surface of the intermediate portion of the burner body, a first air supply section opened at an angle rotated in a spiral form from the outside being provided at the side wall of the burner body, a second air supply section opened at an angle rotated in a spiral from from the air supply layer being provided at the portion slightly closer to the front end side, an air blown off and supplied from the opening of the first air supply section being caused to be agitated and mixed with combustion gas within the burner body, an air pre-heated at the air storage layer being supplied from the second air supply section so that it can be agitated and mixed with combustion gas in the vicinity of the combustion opening, and
wherein a gas conduit is connected to the a dry distillation gas outlet of the dry distillation gas generator to provide an impurity separation tank in the middle of the gas conduit to connect the combustion gas burner unit to the front end portion of the gas conduit.

3. A dry distillation gas generator characterized in that an air chamber and an air blow-off section communicating with the air chamber are disposed at the bottom portion of a tank furnace or combustion chamber having a fuel throw-in portion adapted so that it can be opened and closed and a dry distillation gas outlet, the air blowoff section being comprised of an air vent recessed portion bored at a suitable portion of the bottom surface, an air duct allowing the air chamber provided at the central portion of the air vent recessed portion and the interior of the tank furnace to communicate with each other, and an air dispersion cap fitted over an opening portion within the tank furnace of the air duct, the upper surface of the air dispersion cap being caused to be a portion of the bottom surface of the tank furnace, a blowoff opening being formed at the circumferential side of the air dispersion cap so that an air from the air duct is supplied substantially uniformly in a decelerated and dispersed state into the tank furnace from the circumferential side blowoff opening of the air dispersion cap toward the lateral direction, the supplied air being allowed to softly and evenly spread over the entirety of the bottom surface along the air vent recessed portion around the air dispersion cap.

4. A dry distillation gas generator characterized in that a tank furnace having a fuel throw-in portion adapted so that it can be opened and closed and a dry distillation gas outlet is provided with a cooling layer at the entire outer circumferential surface of the tank furnace, the bottom portion of the tank furnace being of a triple layer structure of a bottom surface made up by a heat resisting material, the cooling layer, and an air chamber, a cleaning port being provided at the side portion of the air chamber, a plurality of air blowoff portions being disposed at the bottom portion of the tank furnace,
the air blowoff portion being comprised of an air vent recessed portion bored at a suitable portion of the bottom surface, an air duct allowing the air chamber provided at the central portion of the air vent recessed portion and the interior of the tank furnace to communicate with each other, an air dispersion cap being fitted into an opening in the tank furnace of the air duct,
the upper surface of the air dispersion cap fitted into the opening in the tank furnace being caused to be a portion of the bottom surface of the tank furnace, an air blown off from the air duct being supplied substantially uniformly in a decelerated and dispersed state into the tank furnace from a blowoff portion formed on the circumferential side of the air dispersion cap toward the lateral direction, the supplied air being allowed to softly and evenly spread over the entirety of the bottom surface along the air vent recessed portion around the air dispersion cap.

5. A combustion gas burner unit characterized in that a cylindrical burner body is formed by a refractory material such as ceramic, etc., a gas conduit portion being formed at the bottom end portion of the burner body, a combustion opening being formed at the front end thereof, a preheat burner section for igniting a pilot being provided at a position close to the bottom end side of the burner body, an air storage layer being provided at the outer circumferential portion of the intermediate portion of the burner body, a first air supply section opened at an angle rotated in a spiral form from the outside being provided at the side wall of the burner body, a second air supply section opened at an angle rotated in a spiral form from the air supply layer being provided at the portion slightly closer to the front end side, an air blown off and supplied from the opening of the first air supply section being caused to be agitated and mixed with combustion gas within the burner body, an air pre-heated at the air storage layer being supplied from the second air supply section so that it can be agitated and mixed with combustion gas in the vicinity of the combustion opening.
